(19) Europäisches Patentamt / European Patent Office / Office européen des brevets

(11) **EP 4 237 492 B1**

(12) **EUROPEAN PATENT SPECIFICATION**

(45) Date of publication and mention
of the grant of the patent:
**20.11.2024   Bulletin 2024/47**

(21) Application number: **21798385.7**

(22) Date of filing: **25.10.2021**

(51) International Patent Classification (IPC):
**C08L 23/10** *(2006.01)*      **C08L 23/14** *(2006.01)*
**C08L 23/04** *(2006.01)*      **C08L 53/00** *(2006.01)*

(52) Cooperative Patent Classification (CPC):
(C-Sets available)
**C08L 23/10;** C08L 2205/035; C08L 2207/20 (Cont.)

(86) International application number:
**PCT/EP2021/079447**

(87) International publication number:
**WO 2022/090105 (05.05.2022 Gazette 2022/18)**

(54) **POLYOLEFINS COMPOSITIONS OBTAINED FROM RECYCLED POLYOLEFINS**

AUS RECYCELTEN POLYOLEFINEN ERHALTENE POLYOLEFINZUSAMMENSETZUNGEN

COMPOSITIONS DE POLYOLÉFINES À PARTIR DE POLYOLÉFINES RECYCLÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **28.10.2020   EP 20204419**

(43) Date of publication of application:
**06.09.2023   Bulletin 2023/36**

(73) Proprietor: **Basell Poliolefine Italia S.r.l.
20121 Milano (IT)**

(72) Inventors:
• **CAVALIERI, Claudio
44122 Ferrara (IT)**
• **TREOSSI, Mauro
44122 Ferrara (IT)**

• **CONSALVI, Marco
44122 Ferrara (IT)**

(74) Representative: **LyondellBasell
c/o Basell Poliolefine Italia
Intellectual Property
P.le Donegani 12
44122 Ferrara (IT)**

(56) References cited:
**EP-A1- 3 165 473      WO-A1-2018/206353
US-B2- 6 586 531**

(52) Cooperative Patent Classification (CPC): (Cont.)

C-Sets
**C08L 23/10, C08L 23/04, C08L 23/12, C08L 23/12,
C08L 23/14, C08L 53/00**

**Description**

FIELD OF THE INVENTION

The present disclosure relates to polyolefin compositions, particularly polypropylene compositions, containing recycled polypropylene that can be used in injection molded articles. The polyolefin compositions according to the present disclosure find application in automotive field, and houseware such as suitcase and containers.

BACKGROUND OF THE INVENTION

Polyolefin compositions for this use, in particular suitcase, are described in WO2006/067023 as being made of:

50-77%, preferably 50 to less than 70%, of a crystalline propylene polymer having an amount of isotactic pentads (mmmm), measured by 13C-MNR on the fraction insoluble in xylene at 25°C, higher than 97.5 molar % and a polydispersity index ranging from 4 to 10, preferably from 5 to 10, more preferably from 5.5 to 10;
13-28%, preferably higher than 15 to 28%, of an elastomeric copolymer of ethylene and propylene, the copolymer having an amount of recurring units deriving from ethylene ranging from 30 to 70%, preferably 35 to 60%, and being partially soluble in xylene at ambient temperature, the polymer fraction soluble in xylene at ambient temperature having an intrinsic viscosity value ranging from 2 to 4 dl/g; and
10-22%, preferably 10 to 20%, of polyethylene having an intrinsic viscosity value ranging from 1 to 3 dl/g and optionally containing recurring units deriving from propylene in amounts up to less than 10%.

The above mentioned compositions are endowed with good stiffness, impact resistance and stress-whitening resistance.

WO 2018/206353 relates to relates to compositions comprising recycled polypropylene the composition comprises an heterophasic copolymer HECO-1 or HECO-2 that do no correspond to components of the present disclosure.
EP 3165473 relates to compositions comprising recycled polypropylene containaing only 30 wt% of recycled polypropylene.

Generally speaking, polyolefin compositions, although being appreciated in terms of performances, give raise to concerns in terms of sustainability with particular reference to the fact that their production is based on the use of non-renewable sources.
As a result, a common attempt to mitigate the problem is that of using, in multicomponent polyolefin compositions, variable amounts of recycled polyolefins such as polypropylene or polyethylene.
The recycled polyolefin derive from streams of post-consumer waste (PCW) material that undergoes various step of separation from other polymers, such as PVC, PET or PS.
One of the key problems in polyolefin recycling, especially when dealing with material streams from post-consumer waste (PCW) is the difficulty to quantitatively separate polypropylene (PP) from polyethylene (PE) and vice-versa. Thus, although named recycled PE (rPE) or recycled PP (rPP), the commercially available products from PCW sources have been found to be mixtures of PP and PE, the minor component reaching up to <50 wt %.
This fact, associated to the presence in the recycled material of additives and minor components that may not be totally suitable for the application in which they are supposed to be used, leads to the consequence that such recycled PP/PE-blends may suffer from deteriorated mechanical, optical and aesthetic properties and poor compatibility between the main polymer phases during remolding. The result is a perceived lower reliability of articles coming from the use of r-PP or r-PE due to the lower performances of the compositions from which they derive.
As a consequence, the use of recycled material in applications requiring a high-performance level, is strongly discouraged and limited to low-cost and non-demanding applications.
It has now been unexpectedly found that certain specific formulations based on recycled polypropylene can be used in the preparation of injection molded articles having an excellent combination of mechanical and aesthetic properties.

SUMMARY OF THE INVENTION

It is therefore an object of the present disclosure a polypropylene composition comprising (per cent by weight):

(a) 52 to 80%, preferably 55 to 75%, more preferably 58-70% of a recycled polypropylene (r-PP);
(b) 8-30 wt% of a recycled polyethylene;

(c) from 4 to 20%, preferably 5 to 18%, more preferably from 6 to 15% of a polyolefin elastomer (POE) being an ethylene-alpha-olefin copolymer selected from $C_2$-$C_4$ copolymers, $C_2$-$C_6$ copolymers and $C_2$-$C_8$ copolymers with an amount of ethylene ranging from 70 to 80%wt;

(d) from 3 to 12%, preferably 4 to 10%, more preferably from 5 to 8% of a composition comprising

i) 20%-90% of a crystalline polypropylene component containing from 25% to 75% of a fraction Al having a melt flow rate $MFR^I$ of from 0.5 to 10 g/10 min., and from 75% to 25% of a fraction A2 having a melt flow rate $MFR^{II}$ such that a ratio $MFR^{II}/MFR^I$ is from 30 to 2000; and wherein fractions Al and A2 are independently selected from the group consisting of a propylene homopolymer, a random copolymer of propylene containing up to 8% of ethylene, and a random copolymer of propylene containing up to 8% of at least one C4-C10 $\alpha$-olefin; and

ii) 10%-80% of a copolymer component of ethylene and propylene, the copolymer containing from 10 to 70% of ethylene, and optionally minor amounts of a diene, said copolymer being soluble in xylene at room temperature, and having an intrinsic viscosity [$\eta$] of from 4 to 9 dl/g;

the whole composition having a value of melt flow rate (ISO 1133 230°C/2.16 kg) ranging from 8.0 g/10' to 30.0 g/10', preferably from 10.0 to 25.0g/10', more preferably from 12.0 to 20.0 g/10'; the percentages of (a), (b), (c) and (d) being referred to the total weight of the polypropylene composition.

DETAILED DESCRIPTION OF THE INVENTION

The term "copolymer" as used herein refers to both polymers with two different recurring units and polymers with more than two different recurring units, such as terpolymers, in the chain.. By "ambient temperature" and "room temperature" is meant a temperature of 25 °C.

By the term "crystalline polypropylene" is meant in the present application a propylene polymer having an amount of isotactic pentads (mmmm), measured by $^{13}$C-MNR on the fraction insoluble in xylene at 25° C, higher than 70 molar %; by "elastomeric" polymer is meant a polymer having solubility in xylene at ambient temperature higher than 50 wt%.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component (a) to (d) and any preferred range of features of components (a) to (d) can be combined with any preferred range of one or more of the features of components (a) to (d) and with any possible additional component, and its features, described in the present disclosure.

The r-PP component (a) comprises plastic waste of post-industrial or post-consumer origin. Preferably, it origins from post-consumer waste (PCW) PP packaging waste, such as for example detergent and shampoo bottles, dairy pots and meat trays, etc. The PP raw material waste can be pre-sorted by waste management companies. One suitable PP source can for example be the waste material collected under the DSD324 (05-2012) and DSD324-1 standard (02-2016). Optical sorting can also be used to remove unwanted polymers, but polystyrene or polyethylene (PE) contamination in the feed still occurs to a certain extent that prevent from using it as the only polymer component of the composition.

PP is available in three different families of products, PP homopolymers (PPh), PP random copolymer (PPr) and PP impact copolymer (or heterophasic PP copolymer, PPc).

The waste material can for example be characterized as originating from following sources (a) extrusion sheet and film material, mostly PP homopolymers (PPh) and PP random copolymers (PPr), virtually without rubber (such as for example biaxially-oriented polypropylene (BOPP)); and (b) injection molded material, which are a mix of PP homopolymer (PPh), PP random copolymers (PPr) and impact copolymer (PPc), containing about 15 wt% rubber.

The recycled PP component (a) can contain approximately half of packaging material (BOPP) and half of rubber-containing injection molded material. This injection molded material can contain rubbers, such as for example C2-C3 rubber, thermoplastic elastomers (TPE), ethylene propylene diene monomers (EPDM) or ethylene propylene rubber (EPR).

The resulting mix of the recycled PP itself used in the polymer composition as component (a) can for example have a rubber content of between 1.5-12 wt% (rubber from rubber-containing injection molded material; wherein wt% is relative to the total amount of the mix of the recycled PP). The recycled PP (a) of the polymer composition is preferably made-up of between 25-75 wt% BOPP and between 25-75 wt% rubber-containing injection molded material; wherein wt% is relative to the total amount of recycled PP.

The recycled PP is present between preferably 55 to 75%, more preferably 58-70% within the polypropylene composition; wherein wt% is relative to the total weight of the polypropylene composition.

While the melt flow rate (ISO 1133 230°C/2.16 kg) of the recycled PP is not critical, it can generally range from 5 to 150 g/10', preferably from 8 to 120 g/10' and more preferably from 40 to 100 g/10'.

The polymer component (b) comprises recycled PE (rPE) which in turn comprises PE waste collected from various sources such as, for example, PE bottles, PE vessels having a volume of 5 liters or more and being cleaned in accordance with environmental specifications or PE extrusion pipes. The recycled PE preferably comprises recycled High-Density Polyethylene (HDPE) to at least 90 wt%, more preferably at least 92 wt%, most preferably at least 95 wt%.

The recycled PE can contains a variety of contaminants that are removed by means of a plurality of steps, including cleaning steps, washing steps and sorting steps. The PE recyclate may preferably comprise 0-6 wt%, more preferably between 1-5 wt%, most preferably between 3-4.5 wt% polypropylene and up to 1 wt% polystyrene contaminants, wherein wt% is relative to the total amount of recycled PE.

The recycled PE preferably has a density in the range of approximately 0.94-0.97 $g/cm^3$.

The MFR of the recycled PE (2.16 kg, 190 °C) may preferably be in the range of 0.1-5 g/10' more preferably in the range 0.1-0.5 g/10' which is suitable for blow molding materials. In a particular embodiment, the recycled PE may preferably have a MFR 2.16 kg, 230 °C (g/10 min) of between 0.4-0.9, more preferably between 0.45-0.85.

The recycled PE is preferably present between 10-25 wt%, preferably between 15-23 wt%, within the polymer composition, wherein wt% is relative to the total weight of the polypropylene composition.

Component (c) comprises a polyolefin elastomer (POE) which is an ethylene-alpha-olefin as defined in claim 1.

The POE can preferably be a $C_2$-$C_6$ copolymer or a $C_2$-$C_8$ copolymer with between 70-80 wt% ethylene, more preferably between 73-78 wt%, most preferably between 74-77 wt%; wherein wt% ethylene is relative to the POE.

The POE used in the present disclosure preferably comprises an ethylene (C2) octene (C8) elastomer obtained by the use of a single site transition metal compound based catalyst.

The POE preferably has a density of between 0.85-0.89 $g/cm^3$, more preferably between 0.855-0.885 $g/cm^3$, most preferably between 0.86-0.875 $g/cm^3$.

The POE preferably has an MFR of between 0.3-1, more preferably between 0.4-0.7, most preferably between 0.45-0.6 (190 °C, 2.16 kg).

The POEs are commercially available. Example of POEs are Infuse 9107, Infuse 9077 and Engage XLT8677 commercialized by Dow Chemical Company.

The POE is present at between 4 to 20%, preferably 5 to 18%, more preferably from 5 to 8% with respect to the total weight of the polypropylene composition.

Component (d) of the composition contains at least two components: a crystalline polypropylene component and a copolymer component. The crystalline polypropylene component (i) is present in an amount ranging from 20 to 90%, preferably 30 to 80%, most preferably 50 to 80% of the total weight of the masterbatch composition. Conversely, the copolymer component (ii) is present in an amount of from 80 to 10%, preferably 70 to 20%, most preferably 50 to 20% of the total weight of the masterbatch composition, with the sum of the percentage amounts of the individual components equal to 100 percent.

The fractions A1 and A2, which form the crystalline polypropylene component (i) can each be a propylene homopolymer, a random copolymer of propylene containing up to 8%, preferably 0.2 to 5% of ethylene, or a random copolymer of propylene containing up to 8%, preferably 1 to 8%, of at least one $C_4$-$C_{10}$ $\alpha$-olefin which conforms to the formula $CH_2$=CHR, wherein R is a linear or branched alkyl $C_1$-$C_8$ radical or an aryl radical such as phenyl. Illustrative $C_4$-$C_{10}$ $\alpha$-olefin include 1-butene, 1-pentene, 1-hexene, 4-methyl-l-pentene and 1-octene, with 1-butene being particularly preferred.

Fractions A1 and A2 differ from one another in their average molecular weight, as described by their melt flow rate. Fraction A1 has a relatively high molecular weight (low melt flow rate MFRI of from 0.5 to 10 g/10 min.) while fraction A2 has a relatively low molecular weight (high melt flow rate). This relationship is defined by the ratio $MFR^{II}$/$MFR^I$, which can range from 30 to 2000, preferably 40 to 2000, more preferably 50 to 1000, still more preferably 60 to 500.

Generally, the content of polymer which is insoluble in xylene at room temperature for fractions A1 and A2 is not less than 80%, more preferably not less than 85%, and most preferably not less than 90% by weight. For propylene homopolymers, the content of polymer which is insoluble in xylene at room temperature is not less than 90%, more preferably not less than 95%, and most preferably not less than 97% by weight, based on the weight of the single fraction.

Component (ii) is a copolymer component of ethylene and propylene containing from 10 to 70% of ethylene, and optionally a minor amount of a diene. The ethylene content of the copolymer component is preferably 15 to 60%, most preferably 15 to 50%.

Suitable dienes include, butadiene, 1,4-hexadiene, 1,5-hexadiene and ethylidene-norbonene-1. When present, the diene is typically in an amount of 0.5 to 10% by weight with respect to the weight of the copolymer component (ii).

The copolymer component (ii) is soluble in xylene at room temperature, and has an intrinsic viscosity [n] in tetraline at 135°C of from 4 to 9, preferably 5 to 8, most preferably 5.5 to 7 dl/g.

The melt flow rate of the whole component (d) can range from 0.1 to 40 g/10 min., more preferably from 0.3 to 15 g/10 min. and more preferably from 0.5 to 10 g/10'.

Component (d) can be prepared by either mechanically blending components (i) and (ii) or obtaining it via sequential polymerization step as described for example in US6,586,531 B2 the relevant part of which is incorporated by reference.

Optionally, an inorganic filler is present as a further component (e). Suitable filler can be chosen from the group consisting of talc, fiber glass, CaCOs, clays carbon black and mica. Among them talc is preferred. Talc can for example be unmodified and does preferably not have a surface coating or surface treatment. Talc may increase the stiffness and strength of the polymer composition and produced articles. Preferably, it has very small particle size with average size lower than 5

The filler can derive in total or in part from the filler present in recycled components of the composition and/or be added as a fresh filler in the preparation of the polypropylene composition.

In general, component (e) is preferably present in amounts ranging from 2 to 4 wt%, based on the total weight of polypropylene composition.

As an optional component (f), a SEBS rubber can be used.

SEBS rubbers are (partly) hydrogenated styrene-butadiene-styrene block copolymers. They belong to the family of styrenic block copolymers (SBC). These polymers are triblock copolymers, having styrene at both extremities of the polymer chain with an internal polybutadiene, polyisoprene or hydrogenated polybutadiene or polyisoprene block.

SEBS copolymers are commercially available, for example under the tradenames of Kraton and Tuftec, such as for example Kraton SEBS G1657MS.

If used, the SEBS is present between 0.1-4wt%, preferably between 0.2-3wt%, based on the total weight of polypropylene composition.

The polypropylene composition can further comprise between 0.05-10wt%, preferably 0.1-8 wt%, of additives.

Additives may comprise polyethylenes (for example virgin HDPE or recycled HDPE), maleic anhydride grafted PEs (PEMA), maleic anhydride grafted PPs (PPMA), stabilizers, peroxides, calcium oxides (CaO) or colorants and stripping agents.

Examples of PE are High-Density PE (HDPE), Low-Density PE (LDPE) and Linear Low-Density PE (LLDPE).

A PP compatible acid having a polar group can be added, such as for example a PPMA.

A PEMA, PE or PPMA can for example be added to the polymer composition between 0.1-2 wt%, preferably between 0.2-1 wt%, more preferably between 0.4-0.8 wt%.

A stabilizer can be added, such as for example masterbatches like Tosaf ME 833848, which is a blend of about 70 wt% LDPE with a phenolic stabilizer (Irganox B225) and an Irgafos. Typically, such a masterbatch is added in an amount between 0.2 and 1.5 wt%, preferably between 0.3 and 1.2 wt%.

A peroxide, in the form of an organic compound or masterbatch can be added. The peroxide improves the flow of the material and can be used to achieve a desired melt flow.

The peroxide can for example be selected from the group of Zebraflow T028, Zebraflow T0214 or Zebraflow T0318, which are masterbatches of a peroxide with a polyolefin. The specific amount of peroxide is determined by the skilled in the art having in mind the melt flow rate of the single components, their respective amounts and the final desired melt flow rate. As an example, the peroxide can amount to 2-10 wt% of the entire additive package.

A CaO can be added to inhibit release of HCl. The CaO can be also added as a masterbatch with for example LDPE. CaO can for example be added in a range between 0-2 wt%.

A black colorant can for example be added to the polymer composition between 0.1-5 wt%, preferably between 1-2 wt% in the form of a masterbatch blend.

Stripping agents are compounds used to remove volatiles during processing of the composition. BYK 4200 is one of the commercially available products.

The amount of the whole package of additives ranges from 0.5 to 7%wt preferably from 1 to 6%wt based on the total amount of the polypropylene composition.

In a preferred embodiment of the present disclosure, the polypropylene composition consists of the following components (per cent by weight):

(a) 52 to 80%, preferably 55 to 75%, more preferably 58-70% of a recycled polypropylene (r-PP);
(b) 8-30 wt% of a recycled polyethylene;
(c) from 4 to 20%, preferably 5 to 18%, more preferably from 6 to 15% of a polyolefin elastomer (POE) as deined in claim 1;
(d) from 3 to 12%, preferably 4 to 10%, more preferably from 5 to 8% of a composition comprising

i) 20%-90% of a crystalline polypropylene component containing from 25% to 75% of a fraction Al having a melt flow rate $MFR^I$ of from 0.5 to 10 g/10 min., and from 75% to 25% of a fraction A2 having a melt flow rate $MFR^{II}$ such that a ratio $MFR^{II}/MFR^I$ is from 30 to 2000; and wherein fractions Al and A2 are independently selected from the group consisting of a propylene homopolymer, a random copolymer of propylene containing up to 8% of ethylene, and a random copolymer of propylene containing up to 8% of at least one $C_4$-$C_{10}$ α-olefin; and
ii) 10%-80% of a copolymer component of ethylene and propylene, the copolymer containing from 10 to 70% of ethylene, and optionally minor amounts of a diene, said copolymer being soluble in xylene at room temperature, and having an intrinsic viscosity [η] of from 4 to 9 dl/g;

- 0.05-10 wt%, preferably 0.1-8 wt%, of additives,

the whole composition having a value of melt flow rate (ISO 1133 230°C/2.16 kg) ranging from 8.0 g/10' to 30 g/10', preferably from 10 to 25g/10', more preferably from 12 to 20 g/10'; the percentages of (a), (b), (c), (d) and additives being referred to the to the total weight of polypropylene composition.

The polymer composition according to the present disclosure preferably has a Flexural modulus ranging between 800-1400 MPa, preferably between 810-1300 MPa.

The polymer composition preferably has a Charpy impact strength at 23°C of 50-100 kJ/m$^2$, more preferably between 40-80 kJ/m$^2$. The Charpy impact strength at -20°C ranges from 5 to 20 kJ/m$^2$, more preferably between from 6 to 15 kJ/m$^2$.

The composition of the present disclosure may exhibit a tensile strength at yield equal to or higher than 15 MPa, an elongation at yield equal to or higher than 10%, and a tensile strength at break equal to or higher than 10 MPa.

The composition of the present disclosure can be obtained by mechanical blending of the components (a)-(d) and optionally further components and additives according to conventional techniques.

The process of making the polymer composition may use a co-rotating twin screw tandem extruder to which the components (a-d) and optionally further components and additives are added.

Additives can be added in a reclaim extruder (first extruder) and a compounding extruder (second extruder) of a tandem extruder.

The polypropylene polymer composition can be presented in granule or flake form to be used for manufacturing articles.

The polypropylene polymer composition of the present disclosure recycled PP is suitable for manufacturing products for long-term use, such as for example boxes, trays, suitcases or consumer goods.

The articles made from the polymer composition are preferably formed by injection molding or blow-molding.

The following examples are given in order to illustrate, but not limit the present disclosure.

## EXAMPLES

## CHARACTERIZATIONS

### Xylene-soluble (XS) Fraction at 25 °C

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%);

XS of components B) and C) have been calculated by using the formula:

$$XStot=WaXSA+WbXSB+WcXSC$$

wherein Wa, Wb and Wc are the relative amount of components A, B and C, respectively, and (A+B+C=1).

### Melt Flow Rate (MFR)

Measured according to ISO 1133 at 230 °C with a load of 2.16 kg, unless otherwise specified.

### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ $\eta$ ].

**Polydispersity index:**

Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:

$$\text{P.I.} = 105/\text{Gc}$$

in which Gc is the crossover modulus which is defined as the value (expressed in Pa) at which G'=G" wherein G' is the storage modulus and G" is the loss modulus.

**Ethylene (C2) content**

### $^{13}$C NMR of propylene/ethylene copolymers

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE = 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

E% mol = 100 * [PEP+PEE+EEE]The weight percentage of ethylene content was evaluated using the following equation:

$$E\%\ \text{wt.} = \frac{100 * E\%\ \text{mol} * MW_E}{E\%\ \text{mol} * MW_E + P\%\ \text{mol} * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

Ethylene C2 content of component b2 has been measured by measuring the C2 content on component B) and then calculated by using the formula C2tot= Xb 1 C2b 1 + Xb2C2b2 wherein Xb1 and Xb2 are the amounts of components b1 and b2 in the composition.

**Samples for the mechanical tests**

Samples have been obtained according to ISO 1873-2:2007.

**Charpy impact test** is determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,

**Melting point and crystallization point**

The melting point has been measured by using a DSC instrument according to ISO 11357-3, at scanning rate of 20°C/min both in cooling and heating, on a sample of weight between 5 and 7 mg., under inert $N_2$ flow. Instrument calibration made with Indium.

EXAMPLES

Extrusion products and injection-molded articles are produced and assessed following ISO19069-2:2016, ISO294-E2017 and ISO294-3:2002.

Materials

Recycled PP
Recycled PE

The POE component (c) used was Infuse 9077
Component (d) is the composition prepared according to example 4 of US US6,586,531 B2
As stabilizer 0.75 wt% TOSAF was used.
The additive package contained a conventional stabilizer mix (Irgafos 168/Irganox 1010), ZebraFlow T028 as a peroxide and BYK4200 as stripping agent.
In comparative example 1 the same composition of example 1 was used with the difference that component (d) was not used.

Table 1: Polymer composition of recycled PP (%wt)

| Ex | rPP | rPE | POE | Comp. (d) | Additives |
|---|---|---|---|---|---|
| Ex 1 | 61 wt% | 18 | 9 | 6 wt% | 6% |
| C1 | " | " | " | - | " |
| | | | | | |

Table 2 - Properties of the final compositions

| Examples and comparative examples | | 1 | C1 |
|---|---|---|---|
| MFR, g/10 min | | 17 | 17 |
| Tensile Modulus, MPa | | 740 | 750 |
| Tensile Strength at yield, MPa | | 18.2 | 18 |
| Elongation at yield, % | | 12 | 13 |
| Tensile Strength at break, MPa | | 13 | 14 |
| Charpy kJ/m$^2$ | at 23° C | 66 | 45 |
| | at 0°C | - | |
| | at -20° C | 9.6 | 8.2 |

The above data shows that the compositions of the present disclosure being based on a high amount of recycled material offer an improved impact/stiffness balance over the compositions of the prior art.

**Claims**

1. A polypropylene composition comprising (per cent by weight):

(a) 52 to 80%, of a recycled polypropylene (r-PP);
(b) 8-30 wt% of a recycled polyethylene;
(c) from 4 to 20% of a polyolefin elastomer (POE) being an ethylene-alpha-olefin copolymer selected from $C_2$-$C_4$ copolymers, $C_2$-$C_6$ copolymers and $C_2$-$C_8$ copolymers with an amount of ethylene ranging from 70 to 80%wt;
(d) from 3 to 12%, of a composition comprising:

i) 20%-90% of a crystalline polypropylene component containing from 25% to 75% of a fraction AI having a melt flow rate MFR$^I$, measured according to ISO 1133 at 230 °C with a load of 2.16 kg, of from 0.5 to 10 g/10 min., and from 75% to 25% of a fraction A2 having a melt flow rate MFR$^{II}$ , measured according to ISO 1133 at 230 °C with a load of 2.16 kg, such that a ratio MFR$^{II}$/MFR$^I$ is from 30 to 2000; and wherein fractions AI and A2 are independently selected from the group consisting of a propylene homopolymer, a random copolymer of propylene containing up to 8% of ethylene, and a random copolymer of propylene containing up to 8% of at least one $C_4$-$C_{10}$ $\alpha$-olefin; and
ii) 10%-80% of a copolymer component of ethylene and propylene, the copolymer containing from 10 to 70% of ethylene, and optionally minor amounts of a diene, said copolymer being soluble in xylene at room temperature, and having an intrinsic viscosity [$\eta$] of from 4 to 9 dl/g;

the whole composition having a value of melt flow rate (ISO 1133 230°C/2.16 kg) ranging from 8.0 g/10' to 30.0 g/10', preferably from 10.0 to 25.0 g/10', more preferably from 12.0 to 20.0 g/10'; the percentages of (a), (b), (c) and (d) being referred to the to the total weight of polypropylene composition.

2. The polypropylene compositions according to claim 1 wherein:

component (a) ranges from 55 to 75%, by weight;
component (b) ranges from 10 to 25 % by weight;
component (c) ranges from 5 to 18 % by weight;
component (d) ranges from 4 to 10% by weight.

3. The polypropylene compositions according to anyone of claims 1-3 having a melt flow rate (ISO 1133 230°C/2.16 kg) ranging from 10 to 25 g/10 min.

4. The polypropylene composition according to anyone of claims 1-3 in which the recycled polyethylene (r-PE) component (b) has a density in the range of 0.94-0.97 g/cm$^3$ and is present between 10-25 wt%, of the total weight of the polypropylene compositon.

5. The polypropylene compositions according to anyone of claims 1-4 wherein component (c) *has a* density ranging from 0.85 to 0.89 and a melt flow rate (190°C/2.16 Kg ISO 1133-1) from 0.3 to 1 g/10'.

6. The polypropylene compositions according to anyone of claims 1-6 wherein in the component (d) contains from 30 to 80% of component (i) and the MFR of its fractions A1 and A2 is such that the ratio $MFR^{II}/MFR^{I}$ range from 40 to 2000.

7. The polypropylene compositions according to anyone of claims 1-6 wherein in the component (d) contains from 20 to 70% of component (ii) which has an intrinsic viscosity [n] at room temperature of from 5 to 8 dl/g.

8. The polypropylene compositions according to anyone of claims 1-7 wherein the component (ii) has an ethylene content ranging from 15 to 60%by weight.

9. The polypropylene compositions according to anyone of claims 1-8 wherein the melt flow rate of the whole component (d) ranges from 0.3 to 15 g/10 min.

10. The polypropylene compositions according to anyone of claims 1-9 wherein the component (d) is present in an amount ranging from 4 to 10% by weight of the total polypropylene composition.

11. The polypropylene composition according to anyone of claims 1-10 further comprising a SEBS rubber as component (f) in an amount from 0.1 to 4%wt based on the total weight of the polypropylene composition.

12. The polypropylene composition according to anyone of claim 1-11 further comprising an additive package.

13. The polypropylene composition according to anyone of claim 1-12 having Charpy impact strength at 23°C ranging from 50-100 $kJ/m^2$, a tensile strength at yield equal to or higher than 15 MPa, an elongation at yield equal to, or higher than, 10%, and a tensile strength at break equal to, or higher than, 10 MPa.

14. An injection molded article made from composition according to claims 1-13.


**Patentansprüche**

1. Polypropylenzusammensetzung, umfassend (in Gewichtsprozent):

(a) 52 bis 80 % eines recycelten Polypropylens (r-PP);
(b) 8 bis 30 Gew.% eines recycelten Polyethylens;
(c) 4 bis 20 % eines Polyolefinelastomers (POE), das ein Ethylen-alpha-Olefin-Copolymer ausgewählt aus $C_2$- bis $C_4$-Copolymeren, $C_2$- bis $C_6$-Copolymeren und $C_2$- bis Cs-Copolymeren mit einer Menge an Ethylen im Bereich von 70 bis 80 Gew.% ist;
(d) 3 bis 12 % einer Zusammensetzung, umfassend:

i) 20 % bis 90 % einer kristallinen Polypropylenkomponente, die 25 % bis 75 % einer Fraktion A1 mit einer Schmelzflussrate $MFR^I$, gemessen gemäß ISO 1133 bei 230 °C mit einer Last von 2,16 kg, von 0,5 bis 10 g/10 min., und 75 % bis 25 % einer Fraktion A2 mit einer Schmelzflussrate $MFR^{II}$, gemessen gemäß ISO 1133 bei 230 °C mit einer Last von 2,16 kg, enthält, so dass ein Verhältnis $MFR^{II}/MFR^1$ 30 bis 2000 beträgt; und wobei die Fraktionen A1 und A2 unabhängig ausgewählt sind aus der Gruppe bestehend aus einem Propylenhomopolymer, einem statistischen Copolymer von Propylen, das bis zu 8 % Ethylen enthält, und einem statistischen Copolymer von Propylen, das bis zu 8 % von mindestens einem $C_4$- bis $C_{10}$-$\alpha$-Olefin enthält; und
ii) 10 % bis 80 % einer Copolymerkomponente von Ethylen und Propylen, wobei das Copolymer 10 bis 70 % Ethylen und gegebenenfalls geringe Mengen eines Diens enthält, wobei das Copolymer in Xylol bei Raumtemperatur löslich ist und eine Grenzviskosität [η] von 4 bis 9 dl/g aufweist;

die gesamte Zusammensetzung einen Wert der Schmelzflussrate (ISO 1133 230 °C/2,16 kg) im Bereich von 8,0 g/10' bis 30,0 g/10', vorzugsweise von 10,0 bis 25,0 g/10', bevorzugter von 12,0 bis 20,0 g/10' aufweist; wobei die Prozentsätze von (a), (b), (c) und (d) sich auf das Gesamtgewicht der Polypropylenzusammensetzung beziehen.

2. Polypropylenzusammensetzungen nach Anspruch 1, wobei:

    Komponente (a) im Bereich von 55 Gew.% bis 75 Gew.% liegt;
    Komponente (b) im Bereich von 10 Gew.% bis 25 Gew.% liegt;
    Komponente (c) im Bereich von 5 Gew.% bis 18 Gew.% liegt;
    Komponente (d) im Bereich von 4 Gew.% bis 10 Gew.% liegt.

3. Polypropylenzusammensetzungen nach einem der Ansprüche 1 bis 3 mit einer Schmelzflussrate (ISO 1133, 230 °C/2,16 kg) im Bereich von 10 bis 25 g/10 min.

4. Polypropylenzusammensetzung nach einem der Ansprüche 1 bis 3, wobei die recycelte Polyethylen- (r-PE)-Komponente (b) eine Dichte im Bereich von 0,94 bis 0,97 g/cm$^3$ hat und in zwischen 10 und 25 Gew.% des Gesamtgewichts der Polypropylenzusammensetzung vorhanden ist.

5. Polypropylenzusammensetzungen nach einem der Ansprüche 1 bis 4, wobei Komponente (c) eine Dichte im Bereich von 0,85 bis 0,89 und eine Schmelzflussrate (190 °C/2,16 kg ISO 1133-1) von 0,3 bis 1 g/10' aufweist.

6. Polypropylenzusammensetzungen nach einem der Ansprüche 1 bis 6, wobei Komponente (d) 30 bis 80 % von Komponente (i) enthält und die MFR ihrer Fraktionen A1 und A2 derart ist, dass das Verhältnis MFR$^{II}$/MFR$^I$ im Bereich von 40 bis 2000 liegt.

7. Polypropylenzusammensetzungen nach einem der Ansprüche 1 bis 6, wobei Komponente (d) 20 bis 70 % von Komponente (ii) enthält, die eine Grenzviskosität [η] bei Raumtemperatur von 5 bis 8 dl/g hat.

8. Polypropylenzusammensetzungen nach einem der Ansprüche 1 bis 7, wobei die Komponente (ii) einen Ethylengehalt im Bereich von 15 bis 60 Gew.% aufweist.

9. Polypropylenzusammensetzungen nach einem der Ansprüche 1 bis 8, wobei die Schmelzflussrate der gesamten Komponente (d) im Bereich von 0,3 bis 15 g/10 min liegt.

10. Polypropylenzusammensetzungen nach einem der Ansprüche 1 bis 9, wobei die Komponente (d) in einer Menge im Bereich von 4 bis 10 Gew.% der gesamten Polypropylenzusammensetzung vorhanden ist.

11. Polypropylenzusammensetzung nach einem der Ansprüche 1 bis 10, des Weiteren umfassend einen SEBS-Kautschuk als Komponente (f) in einer Menge von 0,1 bis 4 Gew.%, bezogen auf das Gesamtgewicht der Polypropylenzusammensetzung.

12. Polypropylenzusammensetzung nach einem der Ansprüche 1 bis 11, des Weiteren umfassend ein Additivpaket.

13. Polypropylenzusammensetzung nach einem der Ansprüche 1 bis 12 mit einer Charpy-Schlagzähigkeit bei 23 °C im Bereich von 50 bis 100 kJ/m$^2$, einer Streckspannung gleich oder größer als 15 MPa, einer Streckdehnung gleich oder größer als 10 % und einer Reißfestigkeit gleich oder größer als 10 MPa.

14. Spritzgegossener Artikel, der aus der Zusammensetzung gemäß den Ansprüchen 1 bis 13 gefertigt ist.

**Revendications**

1. Composition de polypropylène comprenant (pour cent en poids) :

    (a) 52 à 80 % d'un polypropylène recyclé (r-PP) ;
    (b) 8 à 30 % en poids d'un polyéthylène recyclé ;
    (c) 4 à 20 % d'un élastomère polyoléfinique (POE) qui est un copolymère d'éthylène-alpha-oléfine choisi parmi les copolymères en $C_2$-$C_4$, les copolymères en $C_2$-$C_6$ et les copolymères en $C_2$-$C_8$ présentant une quantité d'éthylène située dans la plage de 70 à 80 % en poids ;
    (d) 3 à 12 % d'une composition comprenant

        i) 20 % à 90 % d'un constituant de polypropylène cristallin contenant 25 % à 75 % d'une fraction A1 présentant un indice de fluidité à chaud MFR$^I$, mesuré selon la norme ISO 1133 à 230 °C sous une charge de 2,16 kg, de 0,5 à 10 g/10 min et 75 % à 25 % d'une fraction A2 présentant un indice de fluidité à chaud MFR$^{II}$, mesuré selon la norme ISO 1133 à 230 °C sous une charge de 2,16 kg, de telle sorte qu'un rapport MFR$^{II}$/MFR$^I$ est de 30 à 2000 ; et les fractions A1 et A2 étant indépendamment choisies dans le groupe constitué par un homopolymère de propylène, un copolymère aléatoire de propylène contenant jusqu'à 8 % d'éthylène et un copolymère aléatoire de propylène contenant jusqu'à 8 % d'au moins une alpha-oléfine en $C_4$-$C_{10}$ ; et

ii) 10 % à 80 % d'un constituant copolymère d'éthylène et de propylène, le copolymère contenant 10 à 70 % d'éthylène et éventuellement des quantités mineures d'un diène, ledit copolymère étant soluble dans le xylène à température ambiante et présentant une viscosité intrinsèque [η] de 4 à 9 dl/g ;

l'ensemble de la composition présentant une valeur d'indice de fluidité à chaud (ISO 1133 230 °C/2,16 kg) située dans la plage de 8,0 g/10'à 30,0 g/10', de préférence de 10,0 à 25,0 g/10', plus préférablement de 12,0 à 20,0 g/10' ; les pourcentages de (a), (b), (c) et (d) se rapportant au poids total de la composition de polypropylène.

2.  Compositions de polypropylène selon la revendication 1 :

    le constituant (a) représentant 55 à 75 %, en poids ;
    le constituant (b) représentant 10 à 25 % en poids ;
    le constituant (c) représentant 5 à 18 % en poids ;
    le constituant (d) représentant 4 à 10 % en poids.

3.  Compositions de polypropylène selon l'une quelconque des revendications 1 à 3, présentant un indice de fluidité à chaud (ISO 1133 230 °C/2,16 kg) situé dans la plage de 10 à 25 g/10 min.

4.  Composition de polypropylène selon l'une quelconque des revendications 1 à 3, dans laquelle le constituant de polyéthylène recyclé (r-PE) (b) présente une densité dans la plage de 0,94 à 0,97 g/cm$^3$ et est présent en une quantité entre 10 et 25 % en poids du poids total de la composition de polypropylène.

5.  Compositions de polypropylène selon l'une quelconque des revendications 1 à 4, le constituant (c) présentant une densité située dans la plage de 0,85 à 0,89 et un indice de fluidité à chaud (190 °C/2,16 kg ISO 1133-1) de 0,3 à 1 g/10'.

6.  Compositions de polypropylène selon l'une quelconque des revendications 1-6, le constituant (d) contenant 30 à 80 % du constituant (i) et le MFR de ses fractions A1 et A2 étant tel que le rapport MFR$^{II}$/MFR$^I$ est situé dans la plage de 40 à 2000.

7.  Compositions de polypropylène selon l'une quelconque des revendications 1 à 6, le constituant (d) contenant 20 à 70 % du constituant (ii) qui présente une viscosité intrinsèque [η] à température ambiante de 5 à 8 dl/g.

8.  Compositions de polypropylène selon l'une quelconque des revendications 1 à 7, le constituant (ii) présentant une teneur en éthylène située dans la plage de 15 à 60 % en poids.

9.  Compositions de polypropylène selon l'une quelconque des revendications 1 à 8, l'indice de fluidité à chaud de l'ensemble du constituant (d) étant situé dans la plage de 0,3 à 15 g/10 min.

10. Compositions de polypropylène selon l'une quelconque des revendications 1 à 9, le constituant (d) étant présent en une quantité située dans la plage de 4 à 10 % en poids de la composition de polypropylène totale.

11. Composition de polypropylène selon l'une quelconque des revendications 1 à 10, comprenant en outre un caoutchouc SEBS en tant que constituant (f) en une quantité de 0,1 à 4 % en poids sur la base du poids total de la composition de polypropylène.

12. Composition de polypropylène selon l'une quelconque des revendications 1 à 11, comprenant en outre un ensemble d'additifs.

13. Composition de polypropylène selon l'une quelconque des revendications 1 à 12, présentant une résistance au choc Charpy à 23 °C située dans la plage de 50 à 100 kJ/m$^2$, une résistance à la traction à la limite élastique égale ou supérieure à 15 MPa, un allongement à la limite élastique égal ou supérieur à 10 % et une résistance à la traction à la rupture égale ou supérieure à 10 MPa.

14. Article moulé par injection fabriqué à partir d'une composition selon les revendications 1 à 13.

**EP 4 237 492 B1**

**REFERENCES CITED IN THE DESCRIPTION**

**Patent documents cited in the description**

- WO 2006067023 A
- WO 2018206353 A
- EP 3165473 A
- US 6586531 B2